# EUROPÄISCHE PATENTSCHRIFT

(11) **EP 0 578 153 B1**
(45) Veröffentlichungstag und Bekanntmachung des Hinweises auf die Patenterteilung: **11.10.1995**
(21) Anmeldenummer: 93110618.1
(22) Anmeldetag: 02.07.1993
(51) Int. Cl.: A01G 9/10

(54) **Anzuchtplatte, insbesondere für Forstpflanzen**
Propagation tray, especially for forest plants
Plateau de propagation, en particulier pour plantes forestières

(30) Priorität: 10.07.1992 DE 9209299 U
(43) Veröffentlichungstag der Anmeldung: 12.01.1994
(73) Patentinhaber: HERKUPLAST KUBERN GmbH, D-94140 Ering/Inn (DE)
(72) Erfinder: Kubern, Jürgen, Dr., D-81545 München (DE)
(74) Vertreter: von Hellfeld, Axel, Dr. Dipl.-Phys.

(56) Entgegenhaltungen:
- EP-A- 0 242 498
- DE-U- 8 529 041
- FR-A- 1 252 090
- FR-A- 2 310 082
- FR-A- 2 620 899

## Beschreibung

Die Erfindung betrifft eine Anzuchtplatte, insbesondere für Forstpflanzen, mit wenigstens einem Anzuchtbehälter, der eine am oberen Behälterrand angeordnete Substrateinfüllöffnung und eine sich von der Substrateinfüllöffnung zu einer gegenüberliegenden Bodenfläche erstreckende und dabei Konisch verjüngende Umfangswand aufweist, die am unteren Behälterrand zur Bildung eines teilweise offenen Bodens durch mehrere Stege mit einem zentrisch in der Bodenfläche angeordneten Substratrückhalteeinsatz verbunden ist. Eine derartige Anzuchtplatte ist aus der EP-A-242498 bekannt.

Anzuchtplatten dieser Art werden beispielsweise in Gärtnereien und Baumschulen zur Anzucht von Pflanzensetzlingen verwendet.

Auch können solche Anzuchtplatten verwendet werden, um Jungpflanzen einzubringen. Dafür wird zunächst der Anzuchtbehälter mit einem zur Anzucht geeigneten Substrat, beispielweise Erde, Sand, Humus oder einem Gemisch daraus, gefüllt und anschließend der Pflanzensamen, ein Pflanzenableger, Stecklinge oder eine Pflanzenzwiebel in das Substrat eingebracht. Im allgemeinen weist eine Anzuchtplatte nicht nur einen, sondern zahlreiche Anzuchtbehälter auf. Anzuchtplatten werden heute üblicherweise unabhängig von der Zahl der Anzuchtbehälter im Spritzgieß- oder Tiefziehverfahren als einstückige Kunststoffteile hergestellt. Die Größe der Anzuchtbehälter richtet sich nach der darin aufzuziehenden Pflanze. Oft werdendie Pflanzensamen oder Stecklinge zunächst in Anzuchtplatten mit kleineren Anzuchtbehältern zu kleinen Pflanzen herangezogen, die dann zur weiteren Aufzucht mit ihren Erdballen in andere Anzuchtplatten mit größeren Anzuchtbehältern umgetopft werden.

Das Befüllen der Anzuchtbehälter mit Substrat, das Einbringen der Pflanzensamen, -stecklinge oder -zwiebeln in das Substrat sowie ein gegebenenfalls erfolgendes Umtopfen wird entweder von Hand vorgenommen oder auch automatisch von Maschinen durchgeführt.

Viele Anzuchtbehälter haben einen teilweise offenen Boden, um überschüssiges Gießwasser abfließen zu lassen, um nach unten wachsenden Pflanzenwurzeln keine undurchdringliche Barriere entgegenzustellen und um bei automatisierten Anzuchtanlagen den Durchtritt eines Aushebers zu gestatten, der den Pflanzensetzling samt seinem Erdballen aus dem Anzuchtbehälter herausschiebt. Auch dient der teilweise offende Boden dazu, eine Belüftung des Wurzelraumes zu erreichen. Ein für das Wachstum der Wurzeln idealer, ganz offener Behälterboden läßt sich bei vielen Substraten und insbesondere bei größeren Anzuchtbehältern und/oder Behältern, die eine sich nur schwach in Richtung auf den Boden verjüngende Umfangswand aufweisen, nicht realisieren. Pflanzen, die wie etwa die Eiche, Fichten oder Tannen neben einem seitwärts wachsenden Wurzelwerk auch eine Pfahlwurzel besitzen, stellen besonders hohe Anforderungen an die Gestaltung des Behälterbodens. Einerseits soll dieser so offen wie möglich sein, um den Wurzeln einen ungehinderten Durchgang zu gewähren, andererseits soll er eine optimale Rückhaltewirkung für das in den Anzuchtbehälter gefüllte Substrat aufweisen. Wurzeln, die in die äußere Atmoshäre austreten, sterben ab. Das Ziel ist, eine möglichst große Verzweigung der Wurzeln im Topf zu erreichen und dadurch ein verstärktes Wachstum im Ballen zu haben. Dabei wird eine gute Belüftung des Ballens angestrebt.

In Versuchen wurde festgestellt, daß das seitwärts wachsende Wurzelwerk nach Anstoßen an der Umfangswand des Anzuchtbehälters nicht nur nach unten sondern auch seitwärts an der Umfangswand in einer Art Drehbewegung weiterwächst. Diese im Anzuchtbehälter induzierte Drehbewegung der Seitenwurzeln bleibt unerwünschterweise auch nach dem Einpflanzen der herangezogenen Pflanzensetzlinge in die freie Umgebung erhalten und führt beispielsweise bei derart aufgezogenen Forstpflanzen zu einer lebenslang ungenügenden Verankerung im Boden, wodurch die Gefahr von Windbruch oder Windwurf deutlich erhöht ist.

Der Erfindung liegt die Aufgabe zugrunde, eine Anzuchtplatte bereitzustellen, bei der das Problem der unerwünscht in einer Drehbewegung wachsenden Seitenwurzeln vermindert ist und bei der der oder die Anzuchtbehälterböden bei zugleich guter Rückhaltewirkung für sich im Anzuchtbehälter befindendes Substrat den Pflanzenwurzeln einen möglichst geringen Widerstand entgegensetzen, so daß ein möglichst gutes Durchwachsen der Wurzeln im Ballenbereich stattfindet und so die Anzuchtplatte insbesondere auch zur Anzucht von Forstpflanzen geeignet ist.

Diese Aufgabe ist erfindungsgemäß mit einer Anzuchtplatte gelöst, bei der aus der Umfangswand des oder der Anzuchtbehälter mehrere gleichmäßig voneinander beabstandete und sich vom oberen Behälterrand zum Behälterboden erstreckende Wurzelführungen in den Behälter ragen, bei der der Substratrückhalteeinsatz zumindest annähernd ringförmig geschlossen ausgebildet ist, und bei der zum unteren Behälterrand im wesentlichen rechtwinklige Stege ausschließlich zwischen dem unteren Ende jeder Wurzelführung und dem Substratrückhalteeinsatz angeordnet sind. Die erfindungsgemäß ausgeführten Wurzelführungen sorgen in Verbindung mit den Stegen dafür, daß unerwünscht in einer wendelförmigen Drehung an der Umfangswand des Anzuchtbehälters entlang wachsende Seitenwurzeln so abgelenkt werden, daß sie nach unten weiterwachsen und am Behälterboden angekommen in Öffnungen gelenkt werden, die im Boden ausgebildet sind. Die Wurzelführungen wirken also als Barrieren, die die Drehbewegung der Seitenwurzeln stoppen und sie zwingen, nach unten zu wachsen. Ein Wachsen der Seitenwurzeln entlang der Umfangsfläche in einer Art Drehbewegung ist demnach nur noch bis zum Anstoßen einer solchermaßen wachsenden Wurzel an der nächsten Wurzelführung möglich.

Als Wurzelführungen werden im Sinne der Erfindung nur in den Anzuchtbehälter ragende und sich im wesentlichen vom oberen Behälterrand zum Boden erstreckende Vorsprünge bezeichnet, die soweit in den Behälter hineinragen, daß sie unerwünscht in einer Art Drehbewegung wachsende Wurzeln nach unten ablenken können. Vorsprünge, die beispielsweise ähnlich wie bei Wellblech lediglich zur Stabilitätserhöhung der Umfangswand dienen und Wurzeln nicht ablenken können, sind keine Wurzelführungen im Sinne der Erfindung.

Der zumindest annähernd geschlossen ausgeführte Substratrückhalteeinsatz bildet zusammen mit den die Verbindung zur Umfangswand des Anzuchtbehälters herstellenden Stegen einen Behälterboden, der insbesondere auch den Wurzeln von Forstpflanzen nur einen geringen Widerstand entgegensetzt, indem eine gegebenenfalls vorhandene Pfahlwurzel durch die vom Substratrückhalteeinsatz umschlossene Öffnung und von den Wurzelführungen nach unten abgelenkte Seitenwurzeln durch die zwischen dem Substratrückhalteeinsatz und dem unteren Rand der Umfangswand gebildeten, nur durch die Stege voneinander getrennten Öffnungen hindurchwachsen können. Bevorzugt sind die vorgenannten Öffnungen sowie die vom Substratrückhalteeinsatz umschlossene Öffnung etwa gleich groß ausgeführt.

Erfindungsgemäß wird also der einzige sich in der Bodenfläche des Anzuchtbehälters Pflanzenwurzeln entgegensetzende Widerstand durch die im wesentlichen rechtwinklig zum unteren Behälterrand angeordneten Stege und den Substratrückhalteeinsatz gebildet. Durch eine Anordnung der Stege ausschließlich zwischen dem unteren Ende jeder Wurzelführung und dem Substratrückhalteeinsatz ist die Pflanzenwurzeln Widerstand entgegensetzende Bodenfläche weiter vermindert und die Stabilität des Behälterbodens aufgrund der somit kürzeren Stege erhöht.

In der erfindungsgemäßen Anzuchtplatte nimmt die Breite der Wurzelführungen ausgehend von der Umfangswand behältereinwärts kontinuierlich ab. Diese Ausbildung erleichtert ein platzsparendes Übereinanderstapeln von Anzuchtplatten. Besonders bevorzugt weisen die Wurzelführungen einen im wesentlichen dreieckigen Querschnitt auf, wobei eine Dreiecksseite in der Umfangswand liegt. Die Stege verlaufen dann von der behältereinwärts gekehrten Dreiecksspitze zum Substratrückhalteeinsatz. Mit der im wesentlichen dreieckigen Querschnittsausbildung der Wurzelführungen werden gute Wurzelablenkeigenschaften erzielt und die Stabilität bei geringem Materialeinsatz der Umfangswand erhöht.

Bevorzugt verjüngt sich die Umfangswand vom oberen zum unteren Behälterrand geradlinig und weist keine Stufen oder Absätze auf. Auf diese Weise sind Einflüsse vermieden, die das erwünschte, im wesentlichen nach unten gerichtete Wurzelwachstum stören könnten.

Die Querschnittsform des Anzuchtbehälters kann den Erfordernissen entsprechend gewählt werden. Bevorzugte Ausführungsformen weisen einen runden oder mehreckigen, insbesondere viereckigen Querschnitt auf.

In bevorzugten Ausführungsformen der erfindungsgemäßen Anzuchtplatte ist der Substratrückhalteeinsatz kreisring- oder rautenförmig oder auch drei- und mehreckig ausgeführt. Die Form des Substratrückhalteeinsatzes kann der Querschnittsform des Anzuchtbehälters entsprechen, so daß beispielsweise ein runder Anzuchtbehälter einen kreisringförmigen Substratrückhalteeinsatz aufweist, jedoch ist diese Übereinstimmung nicht notwendig.

Bei einem besonders bevorzugten Ausführungsbeispiel der erfindungsgemäßen Anzuchtplatte weist jeder Anzuchtbehälter einen quadratischen Querschnitt und je eine in der Mitte zwischen zwei benachbarten Behälterecken angeordnete Wurzelführung auf, so daß sich eine zueinander kreuzförmige Anordnung der Wurzelführungen ergibt. Bei dieser Ausführungsform ist der Substratrückhalteeinsatz ebenfalls quadratisch ausgebildet und jede Ecke des quadratischen Rückhalteeinsatzes ist über einen Steg mit der der entsprechenden Ecke gegenüberliegenden Wurzelführung verbunden, d.h. daß die Seiten des Substratrückhalteeinsatzes nicht parallel zum unteren Behälterrand verlaufen, sondern der quadratische Rückhalteeinsatz in der Bodenfläche um 45° gegen den unteren Behälterrand verdreht angeordnet ist. Daraus ergeben sich sehr kurze und damit steife Stege und eine günstige, die Gesamtstabilität des Behälters fördernde Krafteinleitung in den Substratrückhalteeinsatz. Weiterhin resultieren aus dieser Anordnung vier große und vorteilhaft geformte Öffnungen zwischen dem Substratrückhalteeinsatz und dem unteren Behälterrand, wodurch das erwünschte, nach unten gerichtete Wachstum der Pflanzenwurzeln sowenig wie möglich behindert wird. Dennoch können bei dieser Anordnung durch eine im Verhältnis zum unteren Behälterumfang geeignet gewählte Seitenlänge des quadratischen Substratrückhalteeinsatzes, die bevorzugt etwa die Hälfte der Seitenlänge des Behälters an dessen unterem Rand beträgt, die Flachen der fünf im Behälterboden gebildeten Öffnungen etwa gleich groß gehalten werden, so daß eine gute Substratrückhaltewirkung erreicht ist.

Zwar kann eine erfindungsgemäße Anzuchtplatte mit nur einem Anzuchtbehälter hergestellt werden, bevorzugt weist jedoch eine Anzuchtplatte eine Vielzahl häufig in parallelen Reihen angeordneter Anzuchtbehälter auf. Zur Vereinfachung der Handhabung weisen bevorzugt einer oder mehrere Anzuchtbehälter aus der Umfangswand nach außen vorspringende Stapelnocken auf. Die Stapelnocken verhindern, daß zur platzsparenden Lagerung aufeinandergetürmte Anzuchtplatten soweit ineinander rutschen, daß sie nur mühsam wieder voneinander zu trennen sind. Eine einfache Trennbarkeit übereinander gestapelter Anzuchtplatten ist insbesondere bei einem automatisierten Betrieb zur fehlerfreien Zuführung noch nicht mit Substrat befüllter Anzuchtplatten notwendig.

Ausführungbeispiele der Erfindung werden im folgenden anhand schematischer Zeichnungen näher erläutert. Es zeigt:
- Fig. 1: eine erfindungsgemäße Anzuchtplatte mit zwölf Anzuchtbehältern in räumlicher Darstellung,
- Fig. 2: einen Anzuchtbehälter der Anzuchtplatte aus Fig. 1 in vergrößerter, räumlicher Darstellung,
- Fig. 3: den Anzuchtbehälter aus Fig. 2 in Draufsicht von unten,
- Fig. 4: den Schnitt IV-IV aus Fig. 3,
- Fig. 5: den Anzuchtbehälter aus Fig. 2 in Draufsicht von oben, und
- Fig. 6: die Draufsicht eines abgewandelten Anzuchtbehälters von oben.

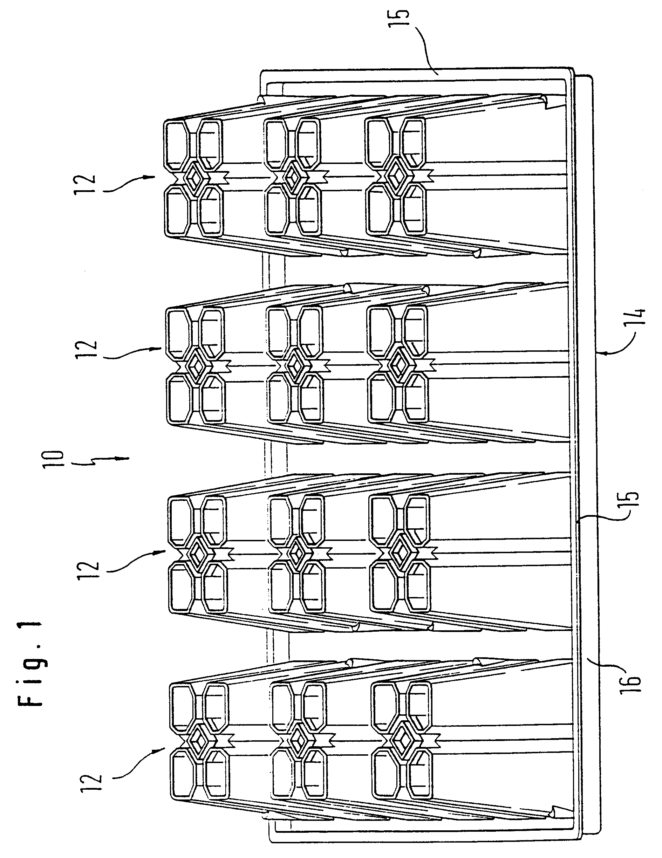

Eine in Fig. 1 dargestellte rechteckige Anzuchtplatte 10 für Forstpflanzen weist zwölf in parallelen Reihen angeordnete Anzuchtbehälter 12 auf. Die Darstellung in Fig. 1 ist, um bestimmte Details sichtbar zu machen, so gewählt worden, daß ein Betrachter auf die Unterseite der Anzuchtplatte 10 blickt, weshalb in einer oberen Begrenzungsfläche 14 ausgebildete Substrateinfüllöffnungen in dieser Darstellung nicht sichtbar sind.

Die in Fig. 1 gezeigte Anzuchtplatte 10 ist im Vakuumtiefziehverfahren aus dickwandiger Kunststoffolie, beispielsweise Polystyrol- oder Polypropylenfolie, als einstückiges Formteil hergestellt. Dazu wird die dickwandige Kunststoffolie zunächst in einer Heizstation z. B mit Quarzstrahlern bis zum plastischen Zustand erwärmt. In einer darauffolgenden Formstation wird die plastifizierte Kunststoffolie an den Stellen, an denen später die Anzuchtbehälter angeordnet sein sollen, durch Stempel vorgedehnt und sodann mittels Vakuum in eine der gewünschten Anzuchtplatte entsprechende Negativform gezogen. Nach dem Erstarren der nunmehr ausgeformten Kunststoffolie wird die Anzuchtplatte in einer Stanzstation entlang eines umlaufenden Randes 15 abgestanzt, der von einem mit der oberen Begrenzungsfläche 14 der Anzuchtplatte verbundenen, nach unten abgewinkelten Bund 16 etwa rechtwinklig nach außen ragt. Sodann wird mit einer Bandsage in einer zu den Substrateinfüllöffnungen parallelen Ebene der unterste Abschnitt jedes Anzuchtbehälters 12 abgetrennt, um zur in Fig. 1 dargestellten Konfiguration zu kommen. Die fertigen Anzuchtplatten 10 werden dann in einer Stapelstation gestapelt und können anschließend gelagert werden.

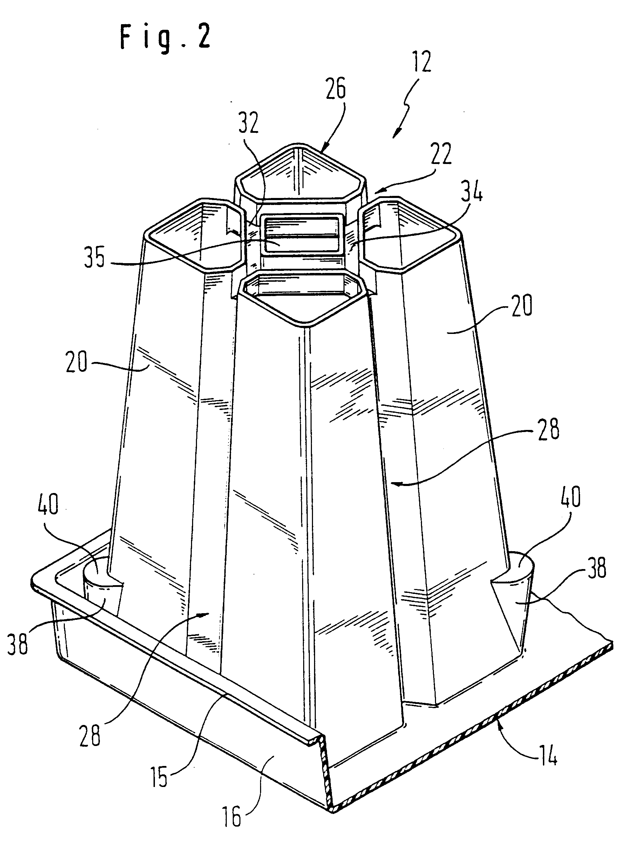

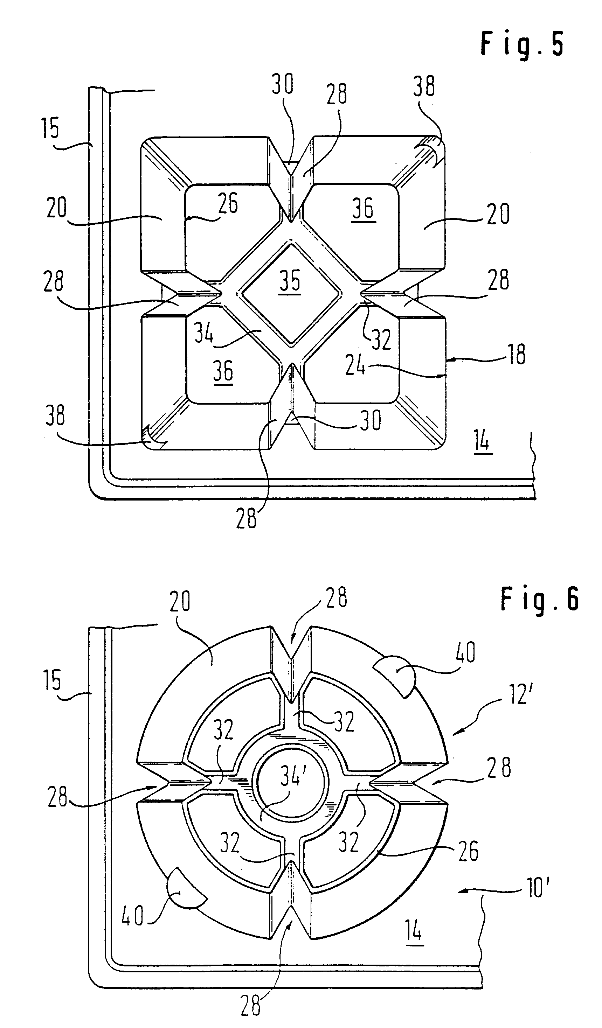

In den Fig. 2 bis 5 ist ein an einer Ecke der Anzuchtplatte 10 angeordneten Anzuchtbehälter 12 vergrößert dargestellt. Wie insbesondere aus den Fig. 2 und 5 ersichtlich, hat der Behälter 12 eine in der oberen Begrenzungsfläche 14 der Anzuchtplatte ausgenommene Substrateinfüllöffnung 18, von der aus eine sich in Gebrauchsstellung der Anzuchtplatte konisch nach unten verjüngende Umfangswand 20 zu einem der Substrateinfüllöffnung 18 gegenüberliegenden Boden 22 erstreckt. Die Umfangswand 20 definiert demnach zusammen mit der Einfüllöffnung 18 und dem Boden 22 einen Behälter mit im wesentlichen quadratischem Querschnitt, dessen Behälterecken abgerundet ausgeführt sind. Die Umfangswand 20 verjüngt sich dabei vom durch die Einfüllöffnung 18 gebildeten oberen Behälterrand 24 zum unteren Behälterrand 26 durchgehend geradlinig, d. h. sie weist insbesondere auch in der Nähe des Bodens 22 keine Stufen oder Absätze auf.

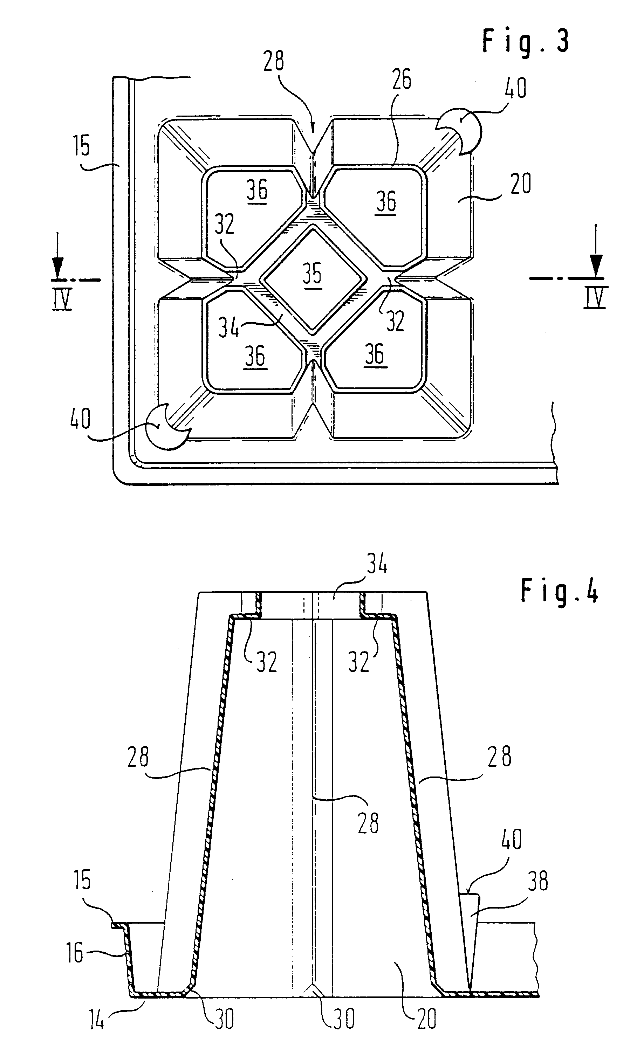

Aus der Umfangswand 20 ragen vier sich vom oberen Behälterrand 24 zum Boden 22 erstreckende, kreuzförmig zueinander angeordnete und als Wurzelführungen 28 bezeichnete rippenförmige Vorsprünge mit dreieckigem Querschnitt in den Behälter 12 (s. insbesondere Fig. 4 und Fig. 5). Zwecks besserer Stapelbarkeit der Anzuchtplatten 10 ist die behältereinwärts gekehrte Dreiecksspitze jeder Wurzelführung 28 auf der Höhe des oberen Behälterrands 24 bei 30 abgeschrägt ausgeführt. Die Wurzelführungen 28 sind in der Umfangswand 20 jeweils in der Mitte zwischen zwei benachbarten Behälterecken angeordnet.

Der Boden 22 des Behälters 12 ist durch sich vom unteren Ende der Wurzelführungen 28 im wesentlichen rechtwinkelig zum unteren Behälterrand 26 behältereinwärts erstreckende Stege 32 und einen zentrisch in der Bodenfläche angeordneten und mit den Stegen 32 verbundenen Substratrückhalteeinsatz 34 gebildet. Der Substratrückhalteeinsatz 34 hat die Form eines umlaufend geschlossenen Quadrats mit einer ebenfalls quadratischen, zentralen Öffnung 35 und ist in der Bodenfläche des Behälters 12 gegenüber dem von der Umfangswand 20 gebildeten unteren Behälterrand 26 um 45° verdreht angeordnet, so daß jede Ecke des Substratrückhalteeinsatzes 34 mit einem Steg 32 verbunden ist. Durch diese Anordnung sind im Boden 22 weiterhin vier Öffnungen 36 ausgebildet, die je von einer Seite des quadratischen Substratrückhalteeinsatzes 34, zwei Stegen 32 und dem unteren Behälterrand 26 begrenzt sind. Eine Seite des Substratrückhalteeinsatzes 34 ist ungefähr halb so lang wie die Seitenlänge des Behälters 12 an seinem unteren Rand 26, so daß die Flächen der Öffnung 35 und einer Öffnung 36 etwa gleich groß sind.

Der Boden 22 mit seinen kurzen und daher steifen Stegen 32 trägt entscheidend zu einer hohen Behälterstabilität bei. Die Steifigkeit des Anzuchtbehälters 12 ist weiter durch die in seiner Gebrauchstellung umgekehrt U-förmige Querschnittsausbildung der Stege 32 und des Substratrückhalteeinsatzes 34 erhöht (siehe insbes. Fig. 2 bis Fig. 4). Insgesamt ist so ein Boden 22 gebildet, der sehr offenflächig und damit wurzeldurchgängig ist und dennoch aufgrund der geschickten Anordnung und Größenwahl des Substratrückhalteeinsatzes 34 in Verbindung mit den Stegen 32 eine sehr gute Rückhaltewirkung für in den Behälter 12 eingefülltes Substrat aufweist.

Damit aufeinander gestapelte Anzuchtplatten 10 nicht soweit ineinander gedrückt werden können, daß sie aufgrund eines ineinanderklemmenden Eingriffs nur noch mühsam voneinander getrennt werden können, sind unterhalb der oberen Begrenzungsfläche 14 der Anzuchtplatte 10 in der Umfangswand 20 des Behälters 12 nach außen ragende Stapelnocken 38 ausgebildet (siehe insbes. Fig. 2 bis Fig. 4). Bei den jeweils an einer Ecke der Anzuchtplatte 10 angeordneten Behältern 12 ragen die Stapelnocken 38 aus einander diametral gegenüberliegenden Behälterecken hervor, während sie bei den beiden mittleren Behältern 12 der in Fig. 1 gezeigten Anzuchtplatte 10 aus zwei benachbarten, jeweils den kurzen Außenseiten der Anzuchtplatte 10 zugekehrten Behälterecken hervortreten. Die Stapelnocken 38 haben in etwa die Form eines Kegels, dessen Spitze zumindest näherungsweise in der oberen Begrenzungsfläche 14 der Anzuchtplatte 10 liegt, und der von oben nach unten von der entsprechenden Behälterecke durchsetzt wird. Durch die parallel zur oberen Begrenzungsfläche 14 verlaufenden Kegelbasen sind Auflageflächen 40 gebildet, mittels derer sich eine Anzuchtplatte 10 auf der oberen Begrenzungsfläche 14 der im Stapel nächstunteren Anzuchtplatte 10 abstützt. Die Höhe der die Stapelnocken 38 bildenden Kegel ist dabei größer als die Breite des um die Anzuchtplatte 10 umlaufenden Bunds 16 gewählt (s. Fig. 4), so daß der vom Bund 16 rechtwinklig nach außen ragende, umlaufende Rand 15 bei aufeinander gestapelten Anzuchtplatten 10 zum Abheben einer Anzuchtplatte bequem untergriffen werden kann.

In Fig. 6 ist eine Anzuchtplatte 10' dargestellt, die sich von der in den Figuren 1 bis 5 gezeigten ersten Ausführungsform im Prinzip nur durch Anzuchtbehälter 12' mit im wesentlichen rundem Querschnitt und durch einen kreisringförmigen Substratrückhalteeinsatz 34' unterscheidet. Ebenso wie bei der ersten Ausführungsform sind auch bei dieser zweiten Ausführungsform alle im Anzuchtbehälter angeordneten Kanten und Ecken abgerundet ausgeführt und die Wurzelführungen 28 gehen an ihrem unteren Ende in die Stege 32 über. Statt des kreisringförmigen Substratrückhalteeinsatzes 34' kann in der zweiten Ausführungsform ohne weiteres auch der quadratische Substratrückhalteeinsatz 34 zur Anwendung kommen.

Bei beiden Ausführungsformen bewirken die in den Behälter ragenden Wurzelführungen 28, daß an die Umfangswand 20 stoßende Wurzeln, die daraufhin entlang der Umfangswand seitlich weiterwachsen und zwangsläufig gegen die Wurzelführungen 28 stoßen, nach unten in Richtung auf den Boden 22 abgelenkt werden. Unten angekommen werden die Wurzeln von den in den Stegen 32 auslaufenden Wurzelführungen 28 in die im Boden 22 ausgebildeten Öffnungen 35, 36 gelenkt. Das unerwünschte, durch Anstoßen an die Behälterwandung ausgelöste "Drehen" von Pflanzenwurzeln ist somit weitgehend unterdrückt.

## Patentansprüche

1. Anzuchtplatte, insbesondere für Forstpflanzen, mit wenigstens einem Anzuchtbehälter (12, 12'), der eine am oberen Behälterrand (24) angeordnete Substrateinfüllöffnung (18) und eine sich von der Substrateinfüllöffnung zu einer gegenüberliegenden Bodenfläche erstreckende und dabei konisch verjüngende Umfangswand (20) aufweist, die zur Bildung eines teilweise offenen Bodens (22) durch mehrere Stege (32) mit einem zentrisch in der Bodenfläche angeordneten, zumindest annähernd ringförmig geschlossen ausgebildeten Substratrückhalteeinsatz (34, 34') verbunden ist, wobei aus der Umfangswand mehrere gleichmäßig voneinander beabstandete und sich vom oberen Behälterrand (24) zum Boden (22) erstreckende Wurzelführungen (28) in den Behälter (12, 12') ragen,
dadurch **gekennzeichnet,** daß die Stege (32) ausschließlich am unteren Behälterrand (26) und im wesentlichen in der durch diesen festgelegten Ebene zwischen dem unteren Ende jeder Wurzelführung (28) und dem Stubstratrückhalteeinsatz (34, 34') angeordnet sind, und daß die Breite der Wurzelführungen (28) von der Umfangswand (20) aus behältereinwärts kontinuierlich abnimmt.

2. Anzuchtplatte nach Anspruch 1,
dadurch **gekennzeichnet,** daß die Wurzelführungen (28) einen im wesentlichen dreieckigen Querschnitt aufweisen und die Stege (32) von der behältereinwärts gekehrten Dreieckspitze zum Substratrückhalteeinsatz (34, 34') verlaufen.

3. Anzuchtplatte nach Anspruch 1 oder 2,
dadurch **gekennzeichnet,** daß die Umfangswand (20) sich vom oberen (24) zum unteren Behälterrand (26) geradlinig verjüngt.

4. Anzuchtplatte nach einem der vorhergehenden Ansprüche,
dadurch **gekennzeichnet,** daß pro Anzuchtbehälter (12, 12') insgesamt vier bezüglich der Ebene der Substrateinfüllöffnung (18) kreuzförmig zueinander angeordnete Wurzelführungen (28) vorhanden sind.

5. Anzuchtplatte nach einem der vorhergehenden Ansprüche,
dadurch **gekennzeichnet,** daß jeder Anzuchtbehälter (12, 12') einen runden oder mehreckigen Querschnitt aufweist.

6. Anzuchtplatte nach einem der vorhergehenden Ansprüche,
dadurch **gekennzeichnet,** daß der Substratrückhalteeinsatz (34, 34') kreisring- oder rautenförmig oder drei- und mehreckig ist.

7. Anzuchtplatte nach einem der Ansprüche 1 bis 3,
dadurch **gekennzeichnet,** daß der Anzuchtbehälter (12) einen quadratischen Querschnitt aufweist, je mindestens eine Wurzelführung (28) in der Mitte zwischen zwei benachbarten Behälterecken angeordnet ist, und jeder Steg (32) mit einer Ecke eines quadratischen Substratrückhalteeinsatzes (34) verbunden ist.

8. Anzuchtplatte nach einem der vorhergehenden Ansprüche,
dadurch **gekennzeichnet,** daß sie eine Vielzahl in parallelen Reihen angeordneter Anzuchtbehälter (12, 12') aufweist.

9. Anzuchtplatte nach einem der vorhergehenden Ansprüche,
dadurch **gekennzeichnet,** daß ein oder mehrere Anzuchtbehälter (12, 12') aus der Umfangswand (20) nach außen vorspringende Stapelnocken (38) aufweis(t)en.

## Claims

1. A propagation tray, especially for forest plants, comprising at least one propagation case (12, 12') which includes a substrate filler opening (18) located at an upper edge (24) of the case and a peripheral wall (20) extending from the substrate filler opening and, at the same time, converging conically towards an opposed bottom face and being connected by a plurality of webs (32) to a substrate retainer insert (34, 34') disposed centrally in the bottom face and designed to be at least approximately of closed annular shape, thus to form a partly open bottom (22), with a plurality of equidistant root guides (28) which extend from the upper case edge (24) to the bottom (22) projecting into the case (12, 12'), **characterized** in that the webs (32) are arrranged exclusively at the lower case edge (26) and substantially in the plane defined by the same between the lower end of each root guide (28) and the substrate retainer insert (34, 34'), and that the width of the root guides (28) diminishes steadily from the peripheral wall (20) in inward direction of the case.

2. The propagation tray as claimed in claim 1, characterized in that the root guides (28) are of substantially triangular cross section and the webs (32) extend from the tip of the triangle which faces inwards of the case toward the substrate retainer insert (34, 34').

3. The propagation tray as claimed in claim 1 or 2, characterized in that the peripheral wall (20) tapers rectilinearly from the upper case edge (24) toward the lower one (26).

4. The propagation tray as claimed in any one of the preceding claims, characterized in that a total of four root guides (28) arranged crosswise from each other with respect to the plane of the substrate filler opening (18) are provided per propagation case (12, 12').

5. The propagation tray as claimed in any one of the preceding claims, characterized in that each propagation case (12, 12') has a round or a polygonal cross section.

6. The propagation tray as claimed in any one of the preceding claims, characterized in that the substrate retainer insert (34, 34') is of circular ring or diamond shape or triangular or polygonal.

7. The propagation tray as claimed in any one of claims 1 to 3, characterized in that the propagation case (12) is square in cross section, at least one root guide (28) being disposed in the middle between two adjacent case corners, and each web (32) is connected to a corner of a square substrate retainer insert (34).

8. The propagation tray as claimed in any one of the preceding claims, characterized in that it comprises a plurality of propagation cases (12, 12') arranged in parallel rows.

9. The propagation tray as claimed in any one of the preceding claims, characterized in that one or more propagation tray(s) (12, 12') comprise(s) stacking lobes (38) which protrude from the peripheral wall (20) to the outside.

## Revendications

1. Plateau de culture, en particulier pour plantes sylvestres, comportant au moins un récipient de culture (12, 12') qui présente une ouverture (18) pour le remplissage du substrat disposée sur le bord supérieur (24) du récipient, et une paroi périphérique (20) qui s'étend depuis l'ouverture pour le remplissage du substrat jusqu'à une surface de fond opposée en se rétrécissant coniquement, et qui est reliée par plusieurs traverses (32) à une garniture (34, 34') de retenue du substrat, de configuration fermée et au moins approximativement en forme d'anneau, disposée au centre de la surface du fond, tandis que plusieurs guides de racines (28), régulièrement espacés l'un de l'autre et s'étendant depuis le bord supérieur (24) du récipient jusqu'au fond (22), débordent dans le récipient (12, 12') depuis la paroi périphérique, caractérisé en ce que les traverses (32) sont disposées uniquement sur le bord inférieur (26) du récipient et essentiellement dans le plan défini par celui-ci, entre l'extrémité inférieure de chaque guide de racines (28) et la garniture (34, 34') de retenue du substrat, et en ce que, depuis la paroi périphérique (20), la largeur des guides des racines (28) diminue de manière continue vers l'intérieur du récipient.

2. Plateau de culture selon la revendication 1, caractérisé en ce que les guides de racines (28) présentent une section transversale essentiellement triangulaire, et les traverses (32) s'étendent vers la garniture (34, 34') de retenue du substrat à partir du sommet du triangle tourné vers l'intérieur du récipient.

3. Plateau de culture selon la revendication 1 ou 2, caractérisé en ce que la paroi périphérique (20) se rétrécit en ligne droite depuis le bord supérieur (24) jusqu'au bord inférieur (26) du récipient.

4. Plateau de culture selon l'une quelconque des revendications précédentes, caractérisé en ce que pour chaque récipient de culture (12, 12'), il existe en tout quatre guides de racine (28) disposés l'une par rapport à l'autre en forme de croix par rapport au plan de l'ouverture (18) pour le remplissage du substrat.

5. Plateau de culture selon l'une quelconque des revendications précédentes, caractérisé en ce que chaque récipient de culture (12, 12') présente une section transversale ronde ou polygonale.

6. Plateau de culture selon l'une quelconque des revendications précédentes, caractérisé en ce que la garniture (34, 34') de retenue du substrat est en forme de cercle, de losange, de triangle ou de polygone.

7. Plateau de culture selon l'une quelconque des revendications 1 à 3, caractérisé en ce que le récipient de culture (12) présente une section transversale carrée, en ce qu'au moins un guide de racines (28) est disposé au milieu de chaque paire d'arêtes voisines du récipient, et chaque traverse (32) est reliée à un coin d'une garniture (34) de retenue de substrat carrée.

8. Plateau de culture selon l'une quelconque des revendications précédentes, caractérisé en ce qu'il présente plusieurs récipients de culture (12, 12') disposés en rangées parallèles.

9. Plateau de culture selon l'une quelconque des revendications précédentes, caractérisé en ce qu'un ou plusieurs récipients de culture (12, 12') présentent des mentons d'empilement (38) débordant vers l'extérieur de la paroi périphérique (20).
